# EUROPÄISCHE PATENTANMELDUNG

(11) **EP 2 468 977 A1**
(43) Veröffentlichungstag der Anmeldung: **27.06.2012**
(21) Anmeldenummer: 11193466.7
(22) Anmeldetag: 14.12.2011
(51) Int. Cl.: E04C 2/52, F28D 20/02, F24D 3/16

(54) **Wärmeleitendes Flächenelement**

(30) Priorität: 21.12.2010 DE 202010016878 U
(71) Anmelder: GiB Gesellschaft für innovative Bautechnologie mbH, 94424 Arnstorf (DE)
(72) Erfinder: Weber, Martin, 94424 Arnstorf (DE)
(74) Vertreter: Klingseisen, Franz

(57) **Zusammenfassung**

Flächenelement mit einer Wärme leitenden Hülle (2), die ein Phasenwechselmaterial (3) umgibt, wobei das Flächenelement (1) direkt oder indirekt mit einer Heiz- bzw Kühlleitung (L, 4, 40) in Wärme leitender Verbindung steht.

## Beschreibung

Die Erfindung betrifft den Aufbau eines Wärme leitenden Flächenelementes, beispielsweise einer Platte, die z. B. für eine Klimadecke verwendet werden kann.

Es ist bekannt, das Wärmespeichervermögen von Betondecken für die Klimatisierung eines darunter liegenden Raumes zu nutzen, wobei in die Betondecke Heiz- bzw. Kühlleitungen eingegossen sind, um beispielsweise nachts die Betondecke zu kühlen, damit sie während der Nutzung des Raumes zur Kühlung eingesetzt werden kann. Hierbei werden zur Verkleidung der Betondecke Flächenelemente aus Metallblech eingesetzt, die in einer Wärme leitenden Verbindung mit der Betondecke stehen, um die in der Betondecke gespeicherte Wärme auf den Raum zu übertragen und umgekehrt.

Der Erfindung liegt die Aufgabe zugrunde, ein Flächenelement bereitzustellen, mittels dem die Wärmespeicherkapazität und die Anpassung an die Erfordernisse der Klimatisierung eines Raumes verbessert werden.

Erfindungsgemäß wird ein Flächenelement aus einer mit einem Phasenwechselmaterial (PCM) gefüllten, Wärme leitenden Hülle vorgesehen, wobei das Flächenelement direkt oder indirekt mit einer Heiz- bzw. Kühlleitung in Wärme leitender Verbindung steht.

Durch die Verwendung eines Phasenwechselmaterials kann die Anpassung an die erforderliche Heizung bzw. Kühlung eines Raumes gezielter vorgenommen werden als durch in Beton eingegossene Leitungen Zusätzlich kann die Wärmespeicherkapazität gegenüber Beton wesentlich verbessert werden. Insgesamt kann ein erfindungsgemäßes Flächenelement in vielfältiger Weise als Wärmeleitelement eingesetzt werden

Die Erfindung wird beispielsweise anhand der Zeichnung näher erläutert Es zeigen
- Fig. 1: einen Querschnitt durch ein plattenförmiges Flächenelement, das mit Phasenwechselmaterial gefüllt ist, in dem Heiz- bzw. Kühlleitungen eingebettet sind,
- Fig. 2: eine Anordnung des Flächenelementes an einer Betondecke,
- Fig. 3: schematisch ein Flächenelement in Wärmeleitkontakt mit einer Heiz- bzw. Kühlleitung,
- Fig. 4: einen Querschnitt durch eine Ausführungsform eines Flächenelementes,
- Fig 5: im Querschnitt schematisch eine weitere Ausführungsform eines Flächenelementes,
- Fig 6: eine Ausgestaltung mit zwei Hohlprofilen,
- Fig. 7: eine abgewandelte Ausführungsform mit zwei Hohlprofilen,
- Fig. 8: schematisch eine Querschnittsansicht mit einem flachen Leitungsquerschnitt,
- Fig. 9: eine Ausführungsabwandlung mit Wärmeleitstegen an der Leitung,
- Fig. 10: schematisch eine Ausführungsform im Querschnitt mit einer von einem Wärmeleitprofil umgebenen Leitung,
- Fig. 11: eine Verbundanordnung mit einer Trägerplatte, und
- Fig. 12: eine abgewandelte Ausführungsform der Anordnung nach Fig. 11.

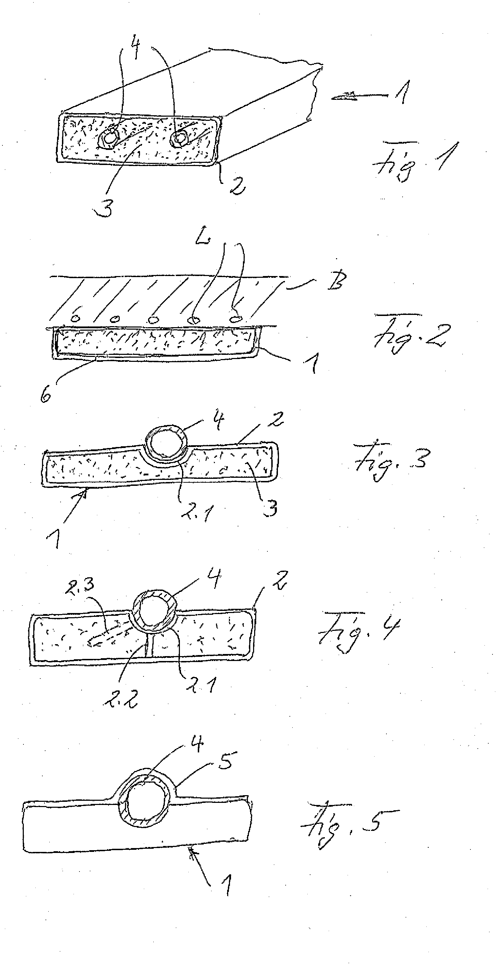

Fig 1 zeigt schematisch den Aufbau eines Flächenelementes 1 von beispielsweise rechteckiger Form, das aus einer Hülle 2 aus gut Wärme leitendem Material, insbesondere Metall, und einer Füllung 3 aus Phasenwechselmaterial aufgebaut ist. Die Hülle 2 kann beispielsweise aus einem durch Strangpressen oder durch Rollverformung hergestellten Hohlprofil bestehen, das an den Enden geschlossen ist Es kann aber auch ein aus im Querschnitt U-förmigen Profilen zusammengesetztes Hohlprofil sein, das an den Verbindungsrändern gegenüber dem Füllmaterial aus PCM dicht ausgebildet ist

In Fig 1 sind in dem mit Phasenwechselmaterial 3 gefüllten Hohlprofil 2 Heiz- bzw. Kühlleitungen 4 eingebettet, sodass das Flächenelement 1 direkt mit den Heiz- bzw. Kühlleitungen 4 über das PCM in Verbindung steht.

Das Phasenwechselmaterial liegt unterhalb der vorgegebenen, von der Art des PCM abhändigen Schalttemperatur von beispielsweise 23 oder 26° C in fester Form vor, beispielsweise in Pulver- oder Granulatform, während es bei Erwärmung über die Schalttemperatur in schmelzflüssigen Zustand übergeht und somit von der Phase fest in die Phase flüssig wechselt. Anstelle von Pulver bzw granulatförmigem PCM kann auch ein in Kunststoffkapseln eingeschlossenes PCM verwendet werden, sodass sich im verflüssigten Zustand des PCM keine Veränderung hinsichtlich Handhabung der Füllung gegenüber dem Ausgangszustand unterhalb der Schalttemperatur ergibt. Bei einer solchen Art der Füllung 3 kann die Dichtigkeit der Hülle 2 auf die Dichtigkeit gegenüber den Kunststoffkapseln anstelle einer Flüssigkeit ausgelegt werden.

Bekannte Phasenwechselmaterialien sind Paraffin und Natriumacetat. An sich könnte auch Wasser als PCM verwendet werden, jedoch liegt die Schalttemperatur von Wasser bei 0° C nicht in dem gewünschten Arbeitsbereich um etwa 23° C. Das Phasenwechselmaterial verflüssigt sich bei Wärmeaufnahme oberhalb der Schalttemperatur und verfestigt sich wieder unter Abgabe von Wärme unterhalb der Schalttemperatur, wobei das hohe Wärmespeichervermögen des Phasenwechselmaterials hinsichtlich Platzbedarf vorteilhaft für die Raumklimatisierung ausgenutzt werden kann, nachdem in einer relativ geringen Masse an PCM eine relativ hohe Wärmeenergie gespeichert werden kann

Durch die Umhüllung des PCM in Platten- oder Lamellenform, kann dieses Material in einfächer Weise in Heiz- bzw. Kühldecken oder auch in Wand- und Fußbodenheizungen integriert werden, wobei die mit PCM gefüllten Flächenelemente direkt mit Heizleitungen in Wärmeleitkontakt stehen können, wie Fig 1 zeigt, oder auch indirekt über ein Wärme leitendes Material zwischen PCM und Heiz- bzw Kühlleitung

Fig 2 zeigt ein Ausführungsbeispiel, bei dem ein mit PCM gefülltes Hohlprofil 1 oder eine Platte 1 in Wärme leitender Verbindung mit einer Betondecke B angeordnet ist, in der Heiz- bzw. Kühlleitungen L eingebettet sind. Hierbei kann auf der Sichtseite die Platte 1 mit einem Metallblech 6 verkleidet sein, wie es üblicherweise für Deckenverkleidungen verwendet wird. Bei dieser Anordnung nach Fig. 2 steht das Flächenelement 1 bzw das PCM indirekt mit den Heiz- bzw Kühlleitungen L in Wärme leitender Verbindung.

Das Wärmespeichervermögen einer beispielsweise 10 mm dicken, mit PCM gefüllten Platte 1 entspricht etwa dem Wärmespeichervermögen einer ca 30 cm dicken Betondecke, wobei das PCM durch Wärmezufuhr oder Kühlung schneller umgeschaltet werden kann, als die mit Heiz-/Kühlleitungen versehene Betondecke

Vorzugsweise weiden mit PCM gefüllte Platten oder Hohlprofile 1 in Wärme leitender Verbindung mit einer Heiz- bzw. Kühlleitung verwendet, wie dies Fig. 3 zeigt. Hierbei ist eine Leitung 4, vorzugsweise eine Kupferleitung, mit rundem Querschnitt in eine entsprechend geformte Vertiefung 21 der Metallhülle 2 der Platte 1 eingesetzt, um die Fläche des Wärme leitenden Kontakts mit der Hülle 2 zu vergrößern.

Zur Verbesserung der Wärmeverteilung von der Leitung 4 über die Wärme leitende Hülle 2 auf das in der Platte 1 verteilte PCM kann innerhalb der Platte 1 wenigstens ein Wärme leitender Steg 2 2 ausgebildet sein, wie Fig. 4 zeigt, durch den die Wärmeübertragung von der Leitung 4 auf das PCM und die dem zu klimatisierenden Raum zugewandte Seite der Platte 1 und damit die Verteilung der Wärme über die Fläche der Platte verbessert wird Ein solcher Wärmeleitsteg 2.2 erhöht die Reaktionsgeschwindigkeit des PCM bzw. des Heiz- oder Kühlsystems Hierzu kann sich ein Wärmeleitsteg auch strahlenförmig in das Phasenwechselmaterial 3 erstrecken, wie dies in Fig. 4 bei 2 3 durch gestrichelte Linien angedeutet ist

Das in Fig 4 wiedergegebene Querschnittsprofil der Hülle 2 mit Wärmeleitsteg 2 2 kann beispielsweise als Strangpressprofil oder als rollverformtes Profil ausgebildet sein, wobei das Hohlprofil nach dem Füllen mit PCM an den Enden so verschlossen wird, dass kein PCM im verflüssigten Zustand entweichen kann

Fig. 5 zeigt eine weitere Ausführungsform, bei der auf der Platte 1 mit in einer Vertiefung der Hülle 2 eingebetteter Leitung 4 eine Abdeckung 5 vorgesehen ist, durch die der Wärmeübergang von der Leitung 4 auf die obere Fläche der Hülle 2. verbessert wird

Diese Abdeckung 5 kann aus einem entsprechend geformten Metallblech oder auch aus einer flexiblen, gut Wärme leitenden Abdeckbahn bestehen, die die Leitung 4 und die Oberseite der Platte 1 abdeckt, wie Fig. 5 schematisch zeigt.

Bei Verwendung der mit PCM gefüllten Platte 1 in Verbindung mit einer gut Wärme leitenden Verkleidung 6 auf der Sichtseite, wie sie in Fig 2 gezeigt ist, wirkt die Platte 1 als Wärmeleitprofil zwischen Leitung 4 und Verkleidung 6 Entsprechend kann die Form der Platte an die Erfordernisse des jeweiligen Aufbaus angepasst sein. Beispielsweise kann die Platte 1 als Leiste bzw. Lamelle oder mehr bandförmig gestaltet sein, wenn das Flächenelement 1 als Wärmeleitprofil für eine einzelne Leitung 4 dient In Verbindung mit einem Heiz- bzw. Kühlregister mit mehreren nebeneinander liegenden Leitungen kann die Platte 1 entsprechend den Abmessungen des Deckenelementes oder auch in nebeneinander liegenden Streifen ausgebildet sein

Anstelle einer Streifen- oder Lamellenform des Flächenelementes 1 kann auch eine andere Form des als Wärmeleitprofil dienenden, mit PCM gefüllten Flächenelementes vorgesehen werden Beispielsweise kann die Hülle 2 im Querschnitt auch rund oder oval gestaltet sein, wobei auf dem Umfang Vertiefungen für eine oder mehrere Heiz- bzw. Kühlleitungen 4 vorgesehen sein können.

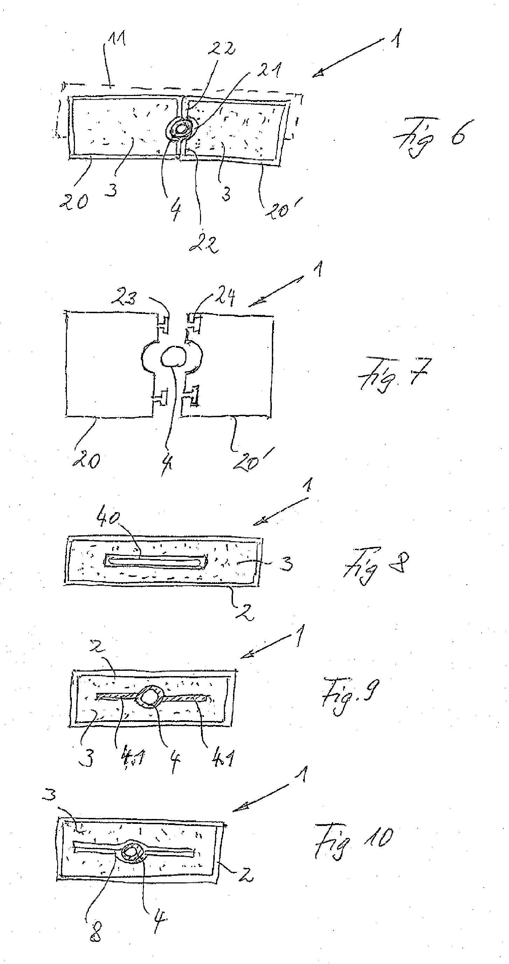

Fig. 6 zeigt schematisch eine Ausführungsform, bei der zwei Hohlprofile 20 und 20' mit jeweils einer Vertiefung an den aneinander liegenden Seitenflächen vorgesehen sind, um eine in die Vertiefungen aufgenommene Leitung 4 ganzflächig zu umschließen. Hierdurch wird der Wärmeübergang zwischen der Leitung 4 und dem Phasenwechselmaterial 3 bzw. die Wärmeverteilung über das PCM verbessert, wobei die beiderseits der Vertiefungen 21 vorhandenen Stege 22 der Hohlprofile 20 und 20' zugleich als Wärmeleitprofile dienen

Fig. 7 zeigt eine Ausgestaltung ähnlich Fig. 6, wobei die beiden eine Leitung 4 vollständig umschließenden Hohlprofile 20 und 20' an den Kontaktflächen formschlüssige Elemente 23 und 24 aufweisen, durch die die beiden Hohlprofile 20 und 20' bei der Montage ineinander geschoben oder ineinander gesteckt werden können, um eine formschlüssige Verbindung herzustellen.

Fig. 8 zeigt ein Ausführungsbeispiel mit einem etwa rechteckigen Hohlquerschnitt eines Hohlprofils 2, in dem eine im Querschnitt flache Heiz- bzw. Kühlleitung 40 angeordnet ist, um die Wärmeverteilung auf das PCM in dem Hohlprofil 2 zu verbessern.

Fig. 9 zeigt ein Ausführungsbeispiel, bei dem an der Leitung 4 an diametral gegenüber liegenden Stellen Wärmeleitflächen 4.1 angeformt sind, die zur besseren Wärmeverteilung über das Volumen des Phasenwechselmaterials 3 dienen.

Fig 10 zeigt eine Ausführungsform, bei der die in PCM eingebettete Heiz- bzw. Kühlleitung 4 von einem Warmeleitprofil 8 umgeben ist, um die Wärmeübertragung und Wärmeverteilung auf das PCM innerhalb der Wärme leitenden Hülle 2 zu verbessern. Mit anderen Worten kann die Heiz- bzw Kühlleitung 4 bzw 40 in einem Hohlprofil 8 angeordnet werden, das wiederum in dem mit PCM 3 gefüllten Hohlprofil 2 enthalten ist In Fig. 10 ist schematisch das Hohlprofil 8 durch zwei aneinander liegende Blechteile wiedergegeben.

Die in PCM eingebetteten Heiz- bzw. Kühlleitungen 4 können eine beliebige Querschnittsform haben und in verschiedener Weise auch mit einem Wärmeleitprofil umgeben sein

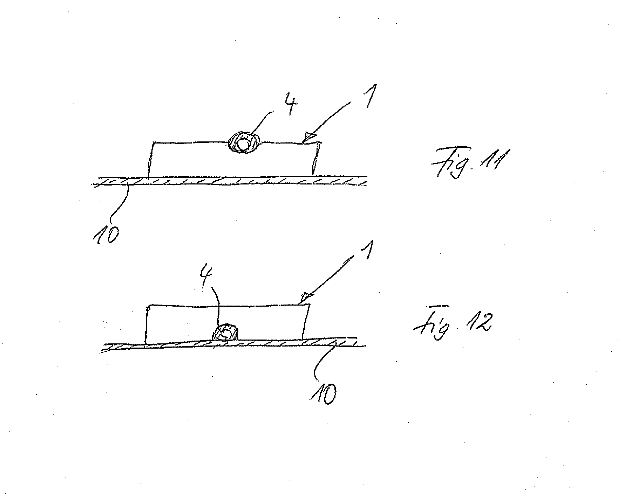

Die in den Fig. 3 bis 10 wiedergegebenen Flächenelemente bzw Hohlprofile können als Heiz- bzw Kühlelemente bei einem Heiz- bzw Kühlsystem verwendet werden. Fig. 11 zeigt eine bevorzugte Anordnung im Verbund mit einer Trägerplatte 10, die beispielsweise aus Gipskarton oder einer Metallplatte, auch einer gelochten Metallplatte, bestehen kann, auf der das mit PCM 3 gefüllte Hohlprofil 2 aufliegt, wobei die Heiz- bzw. Kühlleitung 4 innerhalb des Hohlprofils 2 verlaufen kann, wie Fig 1 zeigt, oder in Wärme leitender Verbindung mit der Hülle 2 stehen kann, wie dies Fig 3 bis 6 zeigen Ein solcher Verbund des erfindungsgemä-βen Flächenelementes 1 mit einer Trägerplatte 10 kann insbesondere bei Kühl- und Heizdecken oder entsprechenden Wandelementen vorgesehen werden

Fig 12 zeigt eine solche Verbundanordnung zwischen Flächenelement 1 und Trägerplatte 10, wobei die Heiz- bzw. Kühlleitung 4 einerseits mit der Trägerplatte 10 in Wärme leitender Verbindung steht und andererseits mit der Hülle 2 des Flächenelementes 1, das bei diesem Ausführungsbeispiel eine tiefere Ausnehmung als in Fig. 11 aufweist, um den Leitungsquerschnitt im Wesentlichen vollständig aufzunehmen. Eine solche Ausgestaltung kann auch bei den Flächenelementen nach den Fig. 1 bis 5 vorgesehen werden.

Die beiden Hohlprofil 20 und 20' können durch einen in Fig. 6 durch gestrichelte Linien angedeuteten Bügel 11 in dichter Anlage aneinander gehalten werden Es ist aber auch möglich, an den Anlageflächen 22 der beiden Hohlprofile 20 und 20' eine Klebeverbindung vorzusehen

In gleicher Weise kann die Trägerplatte 10 mit dem Flächenelement 1 in Fig. 11 und 12 durch eine Klebeverbindung miteinander verbunden sein.

## Patentansprüche

1. Flächenelement mit einer Wärme leitenden Hülle (2), die ein Phasenwechselmaterial (3) umgibt,
wobei das Flächenelement (1) direkt oder indirekt mit einer Heiz- bzw. Kühlleitung (L, 4, 40) in Wärme leitender Verbindung steht.

2. Flächenelement nach Anspruch 1, wobei die Heiz- bzw. Kühlleitung (4, 40) in dem Phasenwechselmaterial (3) innerhalb der Hülle (2) eingebettet ist, sodass sich eine direkte Wärme leitende Verbindung zwischen Heiz- bzw. Kühlleitung (4, 40) und Phasenwechselmaterial ergibt.

3. Flächenelement nach Anspruch 1, wobei in der Hülle (2) eine Vertiefung (2.1, 21) zur Aufnahme einer Leitung (4) vorgesehen ist, sodass die Heiz- bzw. Kühlleitung (4) indirekt über die Wärme leitende Hülle (2) mit dem Phasenwechselmaterial in Wärme leitender Verbindung steht.

4. Flächenelement nach Anspruch 3, wobei die wenigstens auf einem Teil ihres Umfangs in der Hülle (2) eingebettete Leitung (4) mit einer Abdeckung (5) versehen ist, die aus Wärme leitendem Material besteht und sich wenigstens teilweise über die Fläche der Hülle (2) erstreckt.

5. Flächenelement nach einem der vorhergehenden Ansprüche, wobei innerhalb der Hülle (2) wenigstens ein Wärmeleitsteg (2.2, 2.3) zur Wärmeverteilung innerhalb des PCM vorgesehen ist

6. Flächenelement nach Anspruch 2, wobei die Heiz- bzw. Kühlleitung (4, 40) mit Wärmeleitstegen (4.1) versehen ist, die sich in das Phasenwechselmaterial (3) erstrecken.

7. Flächenelement nach Anspruch 3, wobei mit einer Vertiefung (21) als Aufnahme einer Leitung (4) versehene Hüllen (2) bzw. Hohlprofile (20, 20') so aneinander gesetzt sind, dass die beiden Hohlprofile (20, 20') die Leitung (4) vollständig umschließen.

8. Flächenelement nach Anspruch 7, wobei die beiden Hohlprofile (20, 20') an den aneinander liegenden Flächen mit Profilelementen (23, 24) für eine formschlüssige Verbindung versehen sind.

9. Flächenelement nach einem der vorhergehenden Ansprüche, wobei das Flächenelement (1) mit einer Trägerplatte (10) einen Verbund bildet und mit dieser in Wärme leitender Verbindung steht.

10. Flächenelement mit einer Wärme leitenden Hülle (2), die ein Phasenwechselmateiial (3) umgibt, wobei das Flächenelement (1) an einem Abschnitt eines Massivbaukörpers (B) anliegt, in dem Heiz- bzw. Kühlleitungen (L) angeordnet sind

11. Flächenelement nach einem der vorhergehenden Ansprüche, wobei das Flächenelement (1) mit einer Wärme leitenden Verkleidung (6) versehen ist.
